# EUROPÄISCHE PATENTSCHRIFT

(11) **EP 1 458 580 B1**
(45) Veröffentlichungstag und Bekanntmachung des Hinweises auf die Patenterteilung: **03.08.2011**
(21) Anmeldenummer: 02785389.4
(22) Anmeldetag: 14.11.2002
(51) Int. Cl.: B60G 17/015, B60G 17/04, B60G 17/052, B60G 17/08

(54) **KRAFTFAHRZEUG MIT VARIABEL EINSTELLBARER GASFEDERUNG UND DÄMPFUNG**
MOTOR VEHICLE COMPRISING A VARIABLE, ADJUSTABLE PNEUMATIC SUSPENSION AND DAMPING SYSTEM
AUTOMOBILE A SUSPENSION PNEUMATIQUE ET AMORTISSEMENT VARIABLES

(30) Priorität: 21.12.2001 DE 10163552
(43) Veröffentlichungstag der Anmeldung: 22.09.2004
(73) Patentinhaber: Volkswagen AG, 38436 Wolfsburg (DE)
(72) Erfinder: VAN CAYZEELE, Patricio, 38104 Braunschweig (DE); FISCHER, Norbert, 38476 Barwedel (DE)
(86) Internationale Anmeldenummer: PCT/EP2002/012717
(87) Internationale Veröffentlichungsnummer: WO 2003/053724

(56) Entgegenhaltungen:
- DE-A- 3 821 569
- US-A- 4 743 000
- US-A- 4 778 156
- US-A- 4 826 205
- US-A- 5 255 935

## Beschreibung

Die Erfindung bezieht sich auf ein Kraftfahrzeug mit variabel einstellbarer Gasfederung und Dämpfung nach dem Oberbegriff von Patentanspruch 1.

Aus der DE 38 21 569 C2 ist ein Kraftfahrzeug bekannt, bei dem die Fahrzeugräder über Gasfedern und Schwingungsdämpfer gegen die Karosserie abgestützt sind. Dabei ist sowohl eine Veränderung des Druckes in den Gasfedern als auch eine Veränderung der Dämpfer-Charakteristik, das heißt des Dämpferkraftniveaus in den Gasfedern parallel geschalteten Schwingungsdämpfern möglich, um das Federungsverhalten des Fahrzeugs zu beeinflussen. Die DE 38 21 569 C2 stellt dabei vordergründig auf das Problem ab, die Gasfedern und Schwingungsdämpfer so aufeinander abzustimmen, daß bei Befahrung einer unebenen Wegstrecke Fahrzeugbeschädigung ausgeschaltet werden. Dazu wird der tatsächliche Fahrzustand durch eine geeignete Sensorik erfaßt und in einer Steuereinrichtung ausgewertet. Kommt die Auswertung zu dem Ergebnis, daß eine schlechte Wegstrecke zu schnell befahren wird, so erfolgt ein automatischer Eingriff in den Betrieb des Kraftfahrzeugs durch eine Geschwindigkeitsreduzierung, gegebenenfalls eine Gasfederdruckerhöhung und gegebenenfalls weiterhin eine Veränderung der Dämpfer-Charakteristik in Richtung einer höheren Dämpferkraft. Ein fahrerseitiger Eingriff, mit dem das Niveau des Fahrzeugs eingestellt werden könnte, ist hierbei nicht vorgesehen. Auch eine Wahlmöglichkeit zwischen unterschiedlichen Fahrwerkabstimmungen, beispielsweise einer mehr den Fahrkomfort begünstigenden, weichen Abstimmung oder einer mehr sportlichen, das heißt härteren Abstimmung ist nicht vorgesehen.

Eine Kombination einer Niveauregulierung mit einer automatischen oder auch manuell einstellbaren Fahrwerkabstimmung ist im Zusammenhang mit einem hydropneumatischen Federungssystem der Firma Citroen bekannt. Dieses auch als hydractives Fahrwerk bezeichnete System erzielt eine Umschaltung zwischen einer weichen, komfortablen Fahrwerkabstimmung einerseits und einer harten Fahrwerkabstimmung andererseits durch die Aktivierung bzw. Deaktivierung von hydropneumatischen Kugelfederelementen. Eine Veränderung der Dämpfer-Charakteristik ebenfalls vorhandener Schwingungsdämpfer ist dabei nicht vorgesehen. Das hydropneumatische Federungssystem umfaßt vielmehr für jeden Schwingungsdämpfer ein eigenes hydropneumatisches Kugelfederelement sowie zwei zusätzliche hydropneumatische Kugelfederelemente in Achsmitte. Werden für eine komfortable Abstimmung sämtliche Kugelfederelemente aktiviert, so bleiben im Fall einer sportlichen bzw. harten Abstimmung die in Achsmitte angeordneten Kugelfederelemente deaktiviert. Durch die hydraulische Druckerzeugung, die Vielzahl der benötigten Federelemente und insbesondere die Anordnung von zwei Federelementen in Achsmitte ist der konstruktive Aufwand verhältnismäßig hoch.

Aus der US 4,743,000 A ist ein Fahrzeug nach dem Oberbegriff von Patentanspruch 1 bekannt. Dessen Radaufhängung weist eine Gasfeder mit Zusatzkammer in Parallelschaltung zu einem Schwingungsdämpfer auf.

Ferner ist aus der US 4,778,156 A eine Radaufhängung mit einer Gasfeder und parallelem Schwingungsdämpfer bekannt.

Vor diesem Hintergrund liegt der Erfindung die Aufgabe zugrunde, die technische Umsetzung einer Niveauabsenkung verbunden mit der Möglichkeit einer Verstellung der Fahrwerkabstimmung zu vereinfachen.

Dazu wird ein Kraftfahrzeug gemäß Patentanspruch 1 vorgeschlagen.

Erfindungsgemäß ist neben der Luftfeder ein Elastomerkörper vorgesehen, der bei wirksamer Luftfederung als Anschlagpuffer dient, nach einer maximalen Niveauabsenkung der Luftfeder bzw. des Fahrzeugs jedoch als Feder wirkt, über die das Fahrzeuggewicht abgestützt ist. Damit läßt sich eine sehr gezielte Veränderung der Federrate an einer Gasfeder realisieren, nämlich dadurch, daß zwischen einem Zustand der Federung über die Gasfeder und einem Zustand der Federung über einen Elastomerkörper differenziert wird. Bei einer sportlichen Fahrwerkabstimmung, für die günstigerweise auch die Karosserie abgesenkt wird, um die Wank- und Kippneigung zu reduzieren, ruht das Fahrzeuggewicht im wesentlichen auf den Elastomerkörpern. Dies ermöglicht im Unterschied zu einfachen Metallfedern einen progressiven Kennlinienverlauf der Federkraft.

Auf diese Weise wird ein Fahrwerk mit hoher Funktionalität geschaffen, das sich durch einen einfachen Aufbau auszeichnet. Die gemeinsame Abstimmung sowohl der Gasfedern als auch der Schwingungsdämpfer erlaubt eine hohe Variabilität für die Beeinflussung des Fahrverhaltens. Durch die zu- und abschaltbaren Zusatzkammern der Luftfedern wird ein großer Spielraum für die Fahrwerkabstimmung geschaffen.

Beispielsweise ist es möglich, das Fahrwerk mit einer großen Bodenhöhe und einer weichen Federung für den Geländebetrieb abzustimmen, jedoch bei Bedarf auf ein sportliches Verhalten umzuschalten, bei dem eine geringere Bodenhöhe sowie eine straffere Abstimmung gewünscht ist.

Die Niveauregulierung erfolgt über die Druckversorgung der Luftfedern. Wird eine große Bodenhöhe benötigt, können die Druckkammern der Luftfedern durch eine Aktivierung der Druckversorgungseinrichtung gewissermaßen aufgepumpt werden. Die Zusatzkammern der Luftfedern stellen hingegen Zusatzvolumina dar, die den Druckkammern der Luftfedern zur Komforterhöhung zugeschaltet werden und damit das federwirksame Volumen der Luftfedern erhöhen. Für eine sportliche Abstimmung lassen sich die Zusatzvolumina abschalten, d. h. von dem federwirksamen Volumen der Luftfedern trennen. Im letztgenannten Fall steigt die Federrate der Luftfedern an, d.h. die Federn werden härter.

In einer vorteilhaften Ausgestaltung der Erfindung sind eine Luftfeder und ein Schwingungsdämpfer in ein Federbein integriert, wodurch sich eine kompakte Bauweise ergibt. An dieses Federbein kann ein die Zusatzkammer umschließender Behälter von außen angesetzt werden. Es ist jedoch auch möglich, für das Zusatzvolumen einer Luftfeder einen separaten Behälter vorzusehen, der dann räumlich getrennt von der Luftfeder an dem Fahrzeug untergebracht und mit der Druckkammer der Luftfeder über eine Leitung verbunden werden kann. Letzteres ist insbesondere dann vorteilhaft, wenn im Bereich einer Radaufhängung wenig Bauraum zur Verfügung steht. Denkbar ist es jedoch auch, die Zusatzkammern innerhalb des Federbeins, beispielsweise koaxial um den Schwingungsdämpfer anzuordnen.

Die Steuereinrichtung läßt sich vorzugsweise so ausbilden, daß unter Berücksichtigung der erfaßten bzw. eingegebenen Signale eine Stellsignalkonfiguration erzeugbar ist, in welcher die Schwingungsdämpfer in einen Zustand mit einem hohen Dämpferkraftniveau geschaltet sind, und gleichzeitig die Sperrventile geschlossen sind, so daß die Zusatzkammern von den Druckkammern der Luftfedern getrennt und damit nicht federwirksam sind. In diesem Fall wird eine straffe Fahrwerkabstimmung bewirkt, die vom Fahrer manuell eingestellt werden kann. Möglich ist auch eine automatische Fahrwerksanpassung durch die Auswertung von das Fahrverhalten kennzeichnenden Parametern wie beispielsweise der Fahrgeschwindigkeit, der Einfederung der Schwingungsdämpfer und dergleichen.

Für eine komfortablere Fahrwerkabstimmung wird bevorzugt eine Stellsignalkonfiguration vorgesehen, in welcher die Schwingungsdämpfer in einen Zustand mit niedrigem Dämpferkraftniveau geschaltet und die Sperrventile geöffnet sind, um die Zusatzkammern mit den Druckkammern federwirksam zu koppeln.

In einer weiteren, vorteilhaften Ausgestaltung der Erfindung weist die Druckversorgungseinrichtung einen Kompressor und einen Druckspeicher auf und ist über Druckleitungen durch Ventile gesteuert mit den Gasfedern verbunden. Die Ansteuerung der Ventile erfolgt dabei durch Stellsignale von der Steuereinrichtung aus. Vorzugsweise wird als Druckmedium Luft eingesetzt, so daß im Unterschied zu einer hydraulischen Anlage ein geschlossener Druckmittelkreis nicht unbedingt nötig ist. Auch der Austausch des Druckmediums gestaltet sich - insbesondere bei Verwendung von Luft - gegenüber einem flüssigen Medium einfacher.

In vorteilhafter Ausgestaltung der Erfindung ist eine Eingabevorrichtung zum Erfassen eines Fahrerwunsches für den Fahrwerkszustand vorgesehen, welche bei Betätigung ein den Fahrerwunsch repräsentierendes Signal an die Steuereinrichtung übermittelt. Die Steuereinrichtung berücksichtigt dieses Signal bei der Stellsignalerzeugung. Dabei kann die Steuereinrichtung so ausgelegt sein, daß dem Fahrerwunsch höchste Priorität eingeräumt wird, d. h. der entsprechend von diesem gewählte Fahrwerkszustand zwingend eingestellt wird. Möglich ist jedoch auch eine Bewertung des Fahrersignals im Kontext von parallel erfaßten Fahrzeugparametern, um in kritischen Fahrsituationen eine für die Fahrsicherheit oder die Fahrzeugsicherheit ungünstige Wahl des Fahrers zu übergehen.

Vorzugsweise ist auch eine Eingabevorrichtung zum Erfassen eines Fahrerwunsches für das Fahrzeugniveau vorgesehen, welche bei Betätigung ein den Fahrerwunsch repräsentierendes Signal an die Steuereinrichtung übermittelt, die dieses Signal wiederum bei der Stellsignalerzeugung berücksichtigt.

In einer weiteren, vorteilhaften Ausgestaltung sind an dem Fahrzeug weiterhin Sensoren zur Bestimmung des Fahrzeugniveaus in bezug auf eine Fahrbahn vorgesehen. Zudem weist die Steuereinrichtung Mittel zur Niveauregulierung auf, welche in Abhängigkeit der von den Sensoren erhaltenen Signale sowie einer fahr- und/oder befehlszustandsabhängigen Vorgabe für das Fahrzeugniveau die Stellsignale für die Druckversorgung der Gasfedern beeinflussen. Damit kann im Fahrbetrieb eine automatische Niveauanpassung an die jeweilige Fahrsituation realisiert werden.

Weiterhin ist es möglich, den Betrieb des Fahrzeugmotors und die Getriebesteuerung an die gewählte Fahrwerkabstimmung anzupassen. Vorzugsweise ist daher einer durch die Stellsignale definierten Fahrwerkkonfiguration eine auf das Fahrwerkverhalten abgestimmte Motorkennfeldkonfiguration und/oder Getriebekonfiguration zugeordnet, welche mit Bestimmung des Fahrwerkverhaltens automatisch aktiviert wird bzw. werden. Alternativ oder ergänzend kann eine Fahrdynamikregelung mit mindestens zwei Kennfeldern vorgesehen werden, und zwar derart, daß nach Bestimmung des Fahrwerkverhaltens in der Steuereinrichtung das zugehörige Kennfeld automatisch aktiviert wird.

Nachfolgend wird die Erfindung anhand eines in der Zeichnung dargestellten Ausführungsbeispiels näher erläutert. Die Zeichnung zeigt in:
Figur 1 eine schematische Darstellung eines Kraftfahrzeugs mit variabel einstellbarer Gasfederung und Dämpfung nach der Erfindung,
Figur 2 die Ansteuerung der Gasfeder und des Schwingungsdämpfers für ein ausgewähltes Rad des Fahrzeugs, und in
Figur 3 ein Beispiel für ein Federbein mit einer Gasfeder und einem Schwingungsdämpfer, an das ein Behälter mit einer Zusatzkammer angesetzt ist.

Das Ausführungsbeispiel zeigt ein Personenkraftfahrzeug, dessen Fahrwerk an unterschiedliche Fahrbedingungen anpaßbar ist. Dazu sind die Fahrzeugräder 1, 2, 3, 4 über Gasfedern, insbesondere Luftfedern sowie über Schwingungsdämpfer gegen die Fahrzeugkarosserie abgestützt, wobei sowohl die Federrate der Gasfedern als auch die Dämpfung der Schwingungsdämpfer variabel einstellbar sind.

Um einen guten Komfort zu gewährleisten, wird normalerweise eine Federung mit hoher Flexibilität und geringer Dämpfung, d. h. eine weiche Fahrwerkabstimmung angestrebt. Für eine gute Straßenlage ist hingegen eine weniger flexible Federung mit hoher Dämpfung wünschenswert, um das Handling des Fahrzeugs zu verbessern. Das Fahrwerk fühlt sich dann straffer an. Bisweilen wird eine solche Abstimmung auch als "sportlich" bezeichnet.

Das nachfolgend nun näher erläuterte, erfindungsgemäße Fahrwerk erlaubt eine Anpassung an unterschiedliche Fahrbedingungen und berücksichtigt außerdem die Wünsche des Fahrers für die Abstimmung. Durch die Kombination der Einstellmöglichkeiten der Luftfedern einerseits und der Schwingungsdämpfer andererseits ergeben sich vielfältige Variationsmöglichkeiten für den Fahrbetrieb. Insbesondere ist über die Gas- bzw. Luftfedern zusätzlich eine Niveauregulierung möglich.

Aufgrund der breiten Variationsmöglichkeiten kann das erfindungsgemäße Fahrwerk auch bei sehr unterschiedlichen Anforderungen an das Fahrzeug ein für die jeweiligen Fahrbedingungen günstiges Fahrverhalten bereitstellen. So kann beispielsweise ein Geländebetrieb vorgesehen werden, in dem bei angehobenem Fahrzeugniveau eine weiche Abstimmung vorliegt. Bei Bedarf läßt sich dann ohne weiteres, entweder automatisch gesteuert oder aber auch durch einen entsprechenden Befehl des Fahrers eine Anpassung an eine normale Straße realisieren. Für schnelle Autobahnfahrten kann man das Fahrzeugniveau absenken und gleichzeitig eine Verstellung des Fahrwerks nach hart vornehmen.

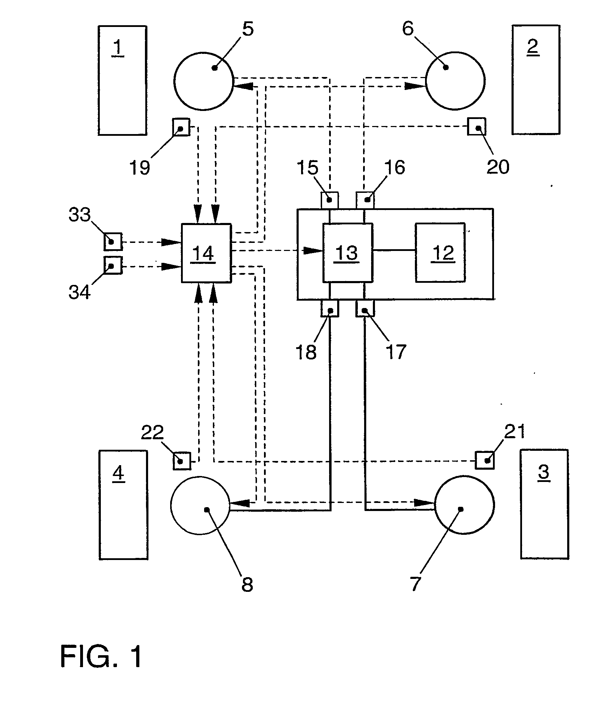

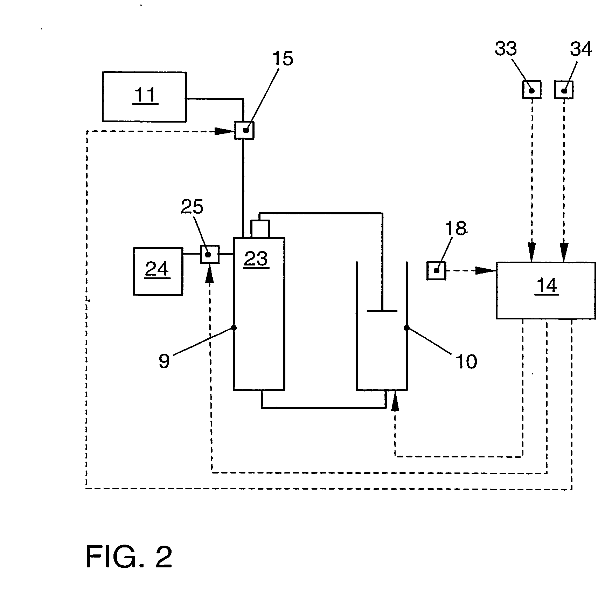

Figur 1 zeigt in sehr schematischer Darstellung das Fahrwerk mit den Fahrzeugrädern 1, 2, 3 und 4, die jeweils über ein Federbein 5, 6, 7 und 8 gegen eine nicht näher abgebildete Fahrzeugkarosserie abgestützt sind. Jedes dieser Federbeine 5, 6, 7 und 8 - eines davon ist in Figur 2 näher dargestellt - umfaßt eine Luftfeder 9 sowie einen dazu funktional parallel geschalteten Schwingungsdämpfer 10.

Außerdem ist an dem Fahrzeug eine Druckversorgungseinrichtung 11 vorhanden, die einen Kompressor 12 sowie mindestens einen Druckspeicher 13 umfaßt. Die Druckversorgungseinrichtung 11 steht über Druckleitungen mit den Luftfedern 9 der Federbeine 5, 6, 7 und 8 in Verbindung. Zur Steuerung der Druckzufuhr zu den einzelnen Luftfedern 9 sind geeignete, hier lediglich symbolhaft,angedeutete Ventile 15, 16, 17 und 18 vorgesehen, welche es erlauben, die Gaszufuhr zu den Luftfedern 9 der einzelnen Federbeine 5, 6, 7 und 8 - gegebenenfalls auch individuell - einzustellen. Insbesondere kann über diese Ventile 15, 16, 17 und 18 eine Niveauregulierung des Fahrzeugs erfolgen.

Zur Ansteuerung dieser Ventile 15, 16, 17 und 18 sowie weiterer Komponenten des Fahrwerks, insbesondere der Schwingungsdämpfer 10, ist eine elektronische Steuereinrichtung 14 vorgesehen, in der sämtliche, für die Ansteuerung der Luftfedern 9 und Schwingungsdämpfer 10 benötigten Informationen zusammenlaufen und in der nach dort abgelegten Auswertungskriterien Stellsignale für das Fahrwerk bzw. dessen Komponenten generiert werden. So umfaßt die Steuereinrichtung 14 u. a. Mittel zur Niveauregulierung, welche in Abhängigkeit erfaßter Istzustandsinformationen sowie einer fahr- und/oder fahrerbefehlszustandsabhängigen Sollvorgabe für das Fahrzeugniveau die Stellsignale für die Druckversorgung der Gas- bzw. Luftfedern 9 beeinflussen.

Als Eingabeinformationen dienen unter anderem Signale von Sensoren, welche die Bestimmung des Fahrzeugniveaus in bezug auf eine Fahrbahn erlauben. In dem hier dargestellten Ausführungsbeispiel sind beispielhaft Höhensensoren 19, 20, 21 und 22 an den einzelnen Federbeinen 5, 6, 7 und 8 vorgesehen. Solche Sensoren sind allgemein bekannt und bedürfen daher keiner näheren Erläuterung. In diesem Zusammenhang sei auf die in der DE 38 21 569 C2 offenbarten Sensoren verwiesen, die hier wie auch andere Sensoren einsetzbar sind. Neben den genannten Informationen können selbstverständlich weitere, das Fahrverhalten kennzeichnende Informationen in der Steuereinrichtung 14 ausgewertet werden. Unter anderem sind dies die Fahrgeschwindigkeit, das Beschleunigung- und Verzögerungsverhalten, ein Lenkeinschlag, Wank-, Gier- und Kippwinkel und dergleichen.

Neben den das Fahrverhalten repräsentierenden Informationen bzw. den entsprechenden Signalen können in der Steuereinrichtung 14 überdies vom Fahrer eingegebene Befehle ausgewertet und bei der Erzeugung der Stellsignale berücksichtigt werden. Dazu ist an dem Fahrzeug eine erste Eingabevorrichtung 33 zum Erfassen eines Fahrerwunsches für den Fahrwerkszustand vorgesehen, die bei Betätigung ein Signal, das den Fahrerwunsch repräsentiert, an die Steuereinrichtung 14 übermittelt. Dies kann beispielsweise eine Taste sein, mit der zwischen einer weichen Fahrwerkabstimmung und einer harten Fahrwerkabstimmung gewählt wird. Selbstverständlich sind auch Eingabevorrichtungen möglich, die eine mehrstufige Signalgenerierung erlauben, um mehr als zwei Fahrwerkabstimmung zur Auswahl anzubieten. Überdies ist in dem Ausführungsbeispiel eine zweite Eingabevorrichtung 34 vorgesehen, über die ein Fahrerwunsch für das Fahrzeugniveau unabhängig von der gewählten Fahrwerkabstimmung eingebbar ist.

In einer Abwandlung des Ausführungsbeispiels können die beiden Eingabevorrichtungen 33 und 34 auch in ein einziges Bedienteil integriert werden. Überdies ist eine Verknüpfung der entsprechenden Signale dahingehend möglich, daß lediglich sinnvolle Kombinationen von Fahrwerkabstimmung und Niveaueinstellung angeboten werden, um einen sicheren Fahrbetrieb zu gewährleisten.

Denkbar ist weiterhin, auf eine fahrerseitige Eingabe ganz oder teilweise zu verzichten und die "fehlenden" fahrerseitigen Befehlsvorgaben aus dem Fahrverhalten des Fahrzeugs, das heißt der Auswertung der oben bereits genannten Informationen abzuleiten. In entsprechender Art und Weise können die aus dem Fahrverhalten abgeleiteten Informationen auch dazu dienen, in kritischen Situationen die vom Fahrer gewählten Einstellungen zu übergehen und so automatisch einen für die Fahrsicherheit und Betriebssicherheit des Fahrzeugs günstigen Zustand einzustellen.

Die Abstimmung des Fahrwerks erfolgt, wie bereits oben beschrieben, u. a. über die Verstellung der Schwingungsdämpfer 10. Diese sind so ausgebildet, daß zwischen unterschiedlichen Dämpfungsniveaus, insbesondere zwischen mehreren unterschiedlich verlaufenden Dämpfungskennlinien hin und her geschaltet werden kann. In dem Ausführungsbeispiel ist der Schwingungsdämpfer 10 durch Stellsignale von der Steuereinrichtung 14 aus zwischen wenigstens zwei Zuständen mit unterschiedlich hohem Dämpferkraftniveau schaltbar.

Zur Abstimmung des Fahrwerks ist überdies das federwirksame Volumen der Luftfeder 9 veränderbar. Jede Luftfeder 9 weist zunächst eine erste Druckkammer 23 auf, über deren Gasvolumen im normalen Fahrbetrieb das Fahrzeuggewicht abgestützt ist. Weiterhin ist jeder Gas- bzw. Luftfeder 9 eine Zusatzkammer 24 zugeordnet, die als zweite Druckkammer über ein schaltbares Sperrventil 25 mit der jeweils zugehörigen ersten Druckkammer 23 verbunden ist. Das Sperrventil 25 wird über ein Stellsignal der Steuereinrichtung 14 angesteuert. Durch ein Öffnen des Sperrventils 25 läßt sich das federwirksame Volumen der Druckkammer 23 erhöhen, wodurch die Federrate der zugehörigen Luftfeder 9 sinkt. Umgekehrt wird durch ein Schließen des Sperrventils 25 eine Erhöhung der Federrate erzielt. Selbstverständlich sind in einer abgewandelten Ausführungsform auch Ventil-Zwischenstellungen denkbar, um eine feinere Abstimmung der Federrate der Luftfeder 9 in Abhängigkeit der erfaßten Fahrzeugparameter und/oder Fahrerbefehle vornehmen zu können.

Die Zusatzkammer 24 kann in einem separaten Behälter vorgesehen werden, der räumlich getrennt von der Luftfeder 9 verhältnismäßig frei an dem Fahrzeug anordenbar ist und mit der Druckkammer 23 der Luftfeder 9 über eine Leitung verbunden ist.

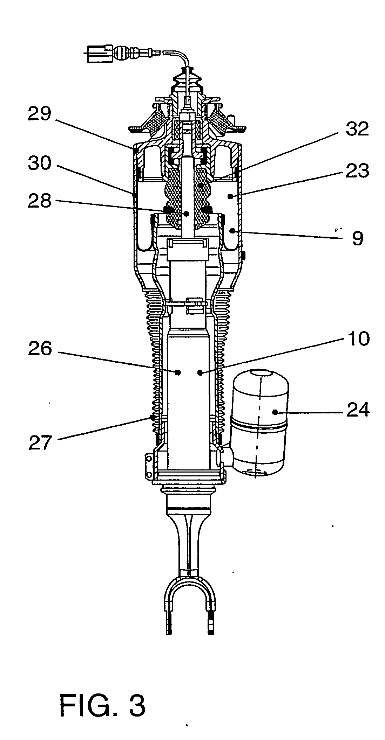

Figur 3 zeigt ein Ausführungsbeispiel für ein Federbein, bei dem die Luftfeder 9 und der Schwingungsdämpfer 10 koaxial zueinander angeordnet sind und ein Behälter mit der Zusatzkammer 24 von außen angesetzt ist.

Der Schwingungsdämpfer 10 ist im Bereich seines Zylinders 26 von einem rohrförmigen Außengehäuse 27 umgeben und stützt sich mit seiner Kolbenstange 28 gegen eine Aufnahme 29 ab. Die Aufnahme 29 ist mit einem rohrförmigen Kragen 30 versehen, der um einen oberen Abschnitt des Außengehäuses 27 herumgezogen ist. Zwischen dem rohrförmigen Außengehäuse 27 und dem rohrförmigen Kragen 30 ist ein Balg 31 vorgesehen, der eine Relativbewegung zwischen dem rohrförmigen Außengehäuse 27 und dem rohrförmigen Kragen 30 zuläßt und die innerhalb dieser beiden gelegene Druckkammer 23 abdichtet. Die Zusatzkammer 24 ist an ein unteres Ende des Außengehäuses 27 angeschlossen, wobei das zugehörige, hier nicht näher dargestellte Sperrventil 25, das beispielsweise ein Magnetventil ist, im Anschlußbereich der Zusatzkammer 24 an das Außengehäuse 27 sitzt.

In Abwandlung des hier dargestellten Ausführungsbeispiels ist es auch möglich, die Zusatzkammer 24 koaxial um den Zylinder 26 des Schwingungsdämpfers 10 herum anzuordnen und das Sperrventil 25 ebenfalls in das Gehäuse des Federbeins zu integrieren.

Weiterhin ist zwischen dem oberen Ende des Zylinders 26 und der Aufnahme 29 eine Zusatzfeder in Form eines Elastomerkörpers 32 vorgesehen. Dieser Elastomerkörper 32 besteht beispielsweise aus einem zelligen Polymer wie z. B. Cellasto-Material. Im Normalbetrieb, d. h. solange die Federwirkung des Federbeins über die Luftfeder 9 bereitgestellt wird, dient der Elastomerkörper 32 als Anschlagpuffer, um im Falle großer Schwingungsamplituden Beschädigungen an dem Fahrzeug zu vermeiden.

Die Luftfeder 9 ist weiterhin so ausgebildet und angeordnet, daß durch eine Absenkung des Fahrzeugniveaus infolge einer Volumenverminderung in der Druckkammer 23 das Fahrzeuggewicht auf dem Elastomerkörper 32 abgelegt werden kann. In diesem Fall dient dann der Elastomerkörper 32 als eigentliche Feder des Federbeins. Durch eine gezielte Umschaltung zwischen einer Luftfederung und einer Federung über einen Elastomerkörper 32 kann eine deutliche Veränderung der Federrate des Federbeins verwirklicht werden, die sich für die Abstimmung des Fahrwerks ausnutzen läßt.

So kann bei einer "sportlich" harten Abstimmung das Fahrzeugniveau abgesenkt werden und die Federung über den Elastomerkörper 32 erfolgen. Gleichzeitig wird der Schwingungsdämpfer 10 in den Zustand eines hohen Dämpferkraftniveaus geschaltet und die Federrate durch eine Verringerung des Luftvolumens erhöht. Außerdem werden die Zusatzkammern 24 abgeschaltet. Eine zusätzliche Erhöhung der Federrate folgt aus der Kontur des Abrollkolbens der Luftfeder 9.

Aufgrund der damit verbundenen Absenkung des Fahrzeugsschwerpunkts nimmt der für die Wank- und Kippneigung relevante Hebelarm ab. Durch eine entsprechende Kinematik in den Fahrzeugachsen vergrößert sich überdies beim Absenken der Karosserie der negative Sturz der Räder sowie die Nachspur an der Vorderachse und die Vorspur an der Hinterachse. Damit läßt sich das Eigenlenkverhalten in Richtung einer höheren Fahrstabilität beeinflussen.

Desweiteren ist mit der Absenkung des Fahrzeugs eine Verringerung der wirksamen Luftangriffsfläche und damit eine Minderung des Luftwiderstands verbunden. Durch eine gezielte Absenkung oder Neigung des Fahrzeugs läßt sich die Anströmung der Bug- und Heckpartie des Fahrzeugs beeinflussen, um je nach Anforderung den dort entstehenden strömungsbedingten Auftrieb zu reduzieren.

Umgekehrt wird bei einem Anheben der Karosserie die Federrate verringert. Mit einer gleichzeitigen Verringerung des Dämpfungskraftniveaus läßt sich eine weichere, d. h. komfortablere Fahrwerkabstimmung realisieren und beispielsweise bei Geländewagen die Geländegängigkeit verbessern. Insbesondere letztgenannten Fall ist es zusätzlich möglich, automatisch eine Stabilisatorentkopplung mit vorzunehmen, um die Wankrate herabzusetzen, mit der Folge, daß der Komfort und die Verschränkung des Fahrzeugs bzw. der Fahrzeugräder verbessert wird.

Weiterhin ist es möglich, die vorstehend erläuterten Abstimmungsmöglichkeiten des Fahrwerks mit besonderen Betriebsweisen des Motors und des Getriebes sowie einer gegebenenfalls zusätzlich vorhandenen Fahrdynamikregelung zu koppeln. Dies kann automatisch erfolgen, indem bei einer bestimmten, beispielsweise durch die Stellsignale definierten Fahrwerkskonfiguration automatisch eine auf das Fahrwerksverhalten abgestimmte Motorkennfeldkonfiguration und/oder Getriebekonfiguration und/oder Fahrdynamikregelungskonfiguration aktiviert wird. Bei einer sportlichen Abstimmung werden z. B. größere Schwimmwinkel für die Fahrdynamikregelung zugelassen.

So kann bei einer bestimmten, vom Fahrer gewählten Fahrwerkabstimmung das gesamte elektronische, vorzugsweise -kennfeldgesteuerte Fahrzeugmanagement beeinflußt werden. Die entsprechenden Kennfelder können in der Steuereinrichtung 14 implementiert sein.

### BEZUGSZEICHENLISTE

- 1 bis 4: Fahrzeugrad
- 5 bis 8: Federbein
- 9: Luftfeder
- 10: Schwingungsdämpfer
- 11: Druckversorgungseinrichtung
- 12: Kompressor
- 13: Druckspeicher
- 14: Steuereinrichtung
- 15 bis 18: Ventil
- 19 bis 22: Höhensensor
- 23: Druckkammer
- 24: Zusatzkammer
- 25: Ventil
- 26: Zylinder
- 27: rohrförmiger Außenbehälter
- 28: Kolbenstange
- 29: Aufnahme
- 30: rohrförmiger Kragen
- 31: Balg
- 32: Elastomerkörper
- 33: erste Eingabevorrichtung
- 34: zweite Eingabevorrichtung

## Patentansprüche

1. Kraftfahrzeug mit variabel einstellbarer Gasfederung und Dämpfung, umfassend:
- Gasfedern (9) zur Abstützung jeweils eines Fahrzeugrades (1, 2, 3, 4) gegen eine Karosserie des Fahrzeugs, die jeweils eine federwirksame Druckkammer (23) aufweisen,
- wenigstens eine Druckversorgungseinrichtung (11) zur Versorgung der Gasfedern (9) mit Druck,
- Schwingungsdämpfer (10), zur Abstützung jeweils eines Fahrzeugrades (1, 2, 3, 4) gegen die Fahrzeugkarosserie, welche funktional parallel zu den Gasfedern (9) angeordnet sind und zwischen wenigstens zwei Zuständen mit unterschiedlich hohem Dämpferkraftniveau schaltbar sind, und
- eine Steuereinrichtung (14), die in Abhängigkeit erfaßter Fahrzeugparameter und/oder vom Fahrer eingegebener Befehle Stellsignale für die Druckversorgung der Gasfedern (9) und die Schwingungsdämpfer (10) erzeugt, und
- den Gasfedern (9) jeweils zugeordnete Zusatzkammem (24), die über ein schaltbares Sperrventil (25) mit der jeweils zugehörigen Druckkammer (23) verbunden sind, wobei die schaltbaren Sperrventile (25) über Stellsignale der Steuereinrichtung (14) angesteuert werden, um das federwirksame Volumen der Druckkammer (23) in Abhängigkeit der erfaßten Fahrzeugparameter und/oder Fahrerbefehle zu erhöhen,
**dadurch gekennzeichnet,**
- **daß** Elastomerkörper (32) vorgesehen sind, die bei wirksamer Luftfederung als Anschlagpuffer dienen, und
- **daß** in einer Fahrwerkskonfiguration bei einer maximalen Niveauabsenkung des Fahrzeugs die Elastomerkörper (32) als Federn wirken, über die das Fahrzeuggewicht abgestützt wird, derart, daß zwischen einer Gasfederung und einer Federung über die Elastomerkörper (32) umgeschaltet werden kann.

2. Kraftfahrzeug nach Anspruch 1, **dadurch gekennzeichnet, daß** eine Luftfeder (9) und ein Schwingungsdämpfer (10) in ein Federbein integriert sind, an welches ein die Zusatzkammer (24) umschließender Behälter von außen angesetzt ist.

3. Kraftfahrzeug nach Anspruch 1, **dadurch gekennzeichnet, daß** für die Zusatzkammer (24) einer Luftfeder (9) einen separater Behälter vorgesehen ist, der räumlich getrennt von der Luftfeder (9) an dem Fahrzeug untergebracht und mit der Druckkammer (23) der Luftfeder (9) über eine Leitung verbunden ist.

## Claims

1. Motor vehicle having a variably adjustable gas suspension system and damping system, comprising:
- gas springs (9) for supporting in each case one vehicle wheel (1, 2, 3, 4) with respect to a body of the vehicle, which gas springs (9) in each case have a spring-effective pressure chamber (23),
- at least one pressure supply device (11) for supplying the gas springs (9) with pressure,
- vibration dampers (10) for supporting in each case one vehicle wheel (1, 2, 3, 4) with respect to the vehicle body, which vibration dampers (10) are arranged functionally parallel to the gas springs (9) and can be switched between at least two states with a damperforce level of differing magnitude, and
- a control device (14) which generates actuating signals for the pressure supply of the gas springs (9) and the vibration dampers (10) as a function of detected vehicle parameters and/or commands which are input by the driver, and
- additional chambers (24) which are assigned in each case to the gas springs (9) and are connected via a switchable shut-off valve (25) to the respectively associated pressure chamber (23), the switchable shut-off valves (25) being actuated via actuating signals of the control device (14), in order to increase the spring-effective volume of the pressure chamber (23) as a function of the detected vehicle parameters and/or driver commands,
**characterized**
- **in that** elastomer bodies (32) are provided which serve as stop buffer in the case of active pneumatic suspension, and
- **in that**, in a chassis configuration in the case of a maximum ride-height lowering of the vehicle, the elastomer bodies (32) act as springs, via which the vehicle weight is supported, in such a way that a switchover can be carried out between gas suspension and suspension via the elastomer bodies (32).

2. Motor vehicle according to Claim 1, **characterized in that** a pneumatic spring (9) and a vibration damper (10) are integrated into a spring strut, to which a container which encloses the additional chamber (24) is attached from the outside.

3. Motor vehicle according to Claim 1, **characterized in that** a separate container is provided for the additional chamber (24) of a pneumatic spring (9), which container is accommodated on the vehicle in a spatially separate manner from the pneumatic spring (9) and is connected via a line to the pressure chamber (23) of the pneumatic spring (9).

## Revendications

1. Véhicule automobile à suspension pneumatique et amortissement variables, comprenant :
- des ressorts pneumatiques (9) pour le support d'une roue respective du véhicule (1, 2, 3, 4) contre une carrosserie du véhicule, qui présentent à chaque fois une chambre de pression (23) à effet de ressort,
- au moins un dispositif d'alimentation en pression (11) pour l'alimentation en pression des ressorts pneumatiques (9),
- des amortisseurs de vibrations (10) pour le support d'une roue respective du véhicule (1, 2, 3, 4) contre la carrosserie du véhicule, qui sont disposés fonctionnellement parallèlement aux ressorts pneumatiques (9) et qui peuvent être commutés entre au moins deux états de niveau de force d'amortissement différents, et
- un dispositif de commande (14), qui produit, en fonction de paramètres détectés du véhicule et/ou d'ordres donnés par le conducteur, des signaux de commande pour l'alimentation en pression des ressorts pneumatiques (9) et des amortisseurs de vibrations (10), et
- des chambres supplémentaires (24) associées à chaque fois aux ressorts pneumatiques (9), qui sont connectées par le biais d'une soupape d'arrêt commutable (25) à la chambre de pression associée respective (23), les soupapes d'arrêt commutables (25) étant commandées par le biais de signaux de commande du dispositif de commande (14), afin d'augmenter le volume à effet de ressort de la chambre de pression (23) en fonction des paramètres détectés du véhicule et/ou des ordres du conducteur,
**caractérisé en ce que**
- des corps élastomères (32) sont prévus, lesquels servent de tampon de butée dans le cas d'une suspension pneumatique effective, et
- **en ce que** dans une configuration de châssis lors d'un abaissement maximal du niveau du véhicule, les corps élastomères (32) agissent en tant que ressorts, par le biais desquels le poids du véhicule est supporté, de telle sorte que les corps élastomères (32) permettent de commuter entre une suspension pneumatique et une suspension à ressort.

2. Véhicule automobile selon la revendication 1, **caractérisé en ce qu'**un ressort pneumatique (9) et un amortisseur de vibrations (10) sont intégrés dans une jambe de force à ressort, sur laquelle est placé depuis l'extérieur un récipient entourant la chambre supplémentaire (24).

3. Véhicule automobile selon la revendication 1, **caractérisé en ce qu'**il est prévu pour la chambre supplémentaire (24) d'un ressort pneumatique (9) un récipient séparé qui est monté de manière séparée spatialement du ressort pneumatique (9) sur le véhicule, et qui est connecté à la chambre de pression (23) du ressort pneumatique (9) par le biais d'une conduite.
